# EUROPÄISCHE PATENTSCHRIFT

(11) **EP 3 864 288 B1**
(45) Veröffentlichungstag und Bekanntmachung des Hinweises auf die Patenterteilung: **06.12.2023**
(21) Anmeldenummer: 19783529.1
(22) Anmeldetag: 07.10.2019
(51) Int. Cl.: F03D 13/20, F03D 80/80, E04H 12/00, E04H 12/08

(54) **WINDKRAFTANLAGE**
WIND TURBINE
ÉOLIENNE

(30) Priorität: 12.10.2018 DE 102018125323
(43) Veröffentlichungstag der Anmeldung: 18.08.2021
(73) Patentinhaber: RWE Offshore Wind GmbH, 45141 Essen (DE)
(72) Erfinder: OBERMEYER, Sebastian, 21147 Hamburg (DE); KLUGKIST, Jürgen, 21465 Reinbek (DE); SCHLÜTER, Thorsten, 25355 Barmstedt (DE); RUNGE, Jörn, 31608 Marklohe (DE)
(74) Vertreter: Cohausz & Florack
(86) Internationale Anmeldenummer: PCT/EP2019/077044
(87) Internationale Veröffentlichungsnummer: WO 2020/074421

(56) Entgegenhaltungen:
- EP-A1- 2 568 169
- EP-A1- 3 279 469
- WO-A1-2018/095643
- CN-A- 106 382 193
- JP-A- 2015 206 327

## Beschreibung

Der Gegenstand betrifft eine Offshore-Windkraftanlage.

Windparks, insbesondere Offshore-Windparks, müssen in der Regel über eine Umspannstation an ein Energieversorgungsnetz angeschlossen werden. Dabei kann eine Umspannstation unmittelbar an einer Windturbine oder als Trafostation innerhalb des Windparks angeordnet sein. In Offshore-Windparks ist ein Monopile ein übliches Design für die Gründungsstruktur einer Windkraftanlage. Ein Monopile kann Kabeleinführungen für Seekabel besitzen, um die Windturbinen untereinander und/oder mit einer Trafostation zu verbinden.

Unter anderem werden Umspannstationen (Trafostationen, Substations) in Offshore-Windparks über sogenannte Jackets gegründet. Zur elektrischen Verbindung werden sogenannte J-Tubes verwendet, die außen an den Jackets angeordnet werden und welche die Seekabel führen. Auch bei der Gründung von Umspannstationen mittels Monopiles werden bisher J-Tubes verwendet, um die Seekabel zu führen. Die Verwendung von J-Tubes ist jedoch aufwändig, fehleranfällig und kostenintensiv, so dass nach Lösungen gesucht wird, hierauf zu verzichten.

Aus diesem Grunde wurde bereits vorgeschlagen, die Seekabel im Inneren der Monopiles zu führen. Über die Kabeleinführungen werden die Seekabel innerhalb des Monopiles nach oben geführt und mittels cable hang-offs an einer unteren Plattform mechanisch befestigt. Eine solche Plattform, auch air tight deck genannt, bietet die Möglichkeit, die Seekabel elektrisch zu verdrahten.

Die Seekabel, die Verwendung finden, sind in der Regel armierte Kabel, welche mit einem metallischen Mantel, insbesondere einem Stahlmantel armiert sind. Der Stahlmantel wird im cable hang-off vergossen und verklemmt um das Kabel an dem air thight deck zu befestigen. Durch eine erhöhte Anzahl an Kabeln, insbesondere wenn mehrere Windturbinen an eine Umspannstation angeschlossen werden, kann es jedoch innerhalb eines Monopiles zu Temperaturproblemen kommen. Aufgrund von ohmschen Verlusten entsteht joulesche Wärme in den Kabeln. Diese Wärme muss am Monopile abgeführt werden. Insbesondere darf eine Leiternenntemperatur von 90°C nicht überschritten werden.

Die EP 2 568 169 A1 beschreibt ein Klimatisierungssystem für die Schalttechnik innerhalb einer Windkraftanlage. Hierbei wird Frischluft und Abwärme verwendet, um die verbauten Komponenten zu klimatisieren. Die innerhalb des Gründungsturms verbauten Kabel werden jedoch nicht berücksichtigt.

Basierend hierauf lag dem Gegenstand die Aufgabe zu Grunde, eine Überhitzung von Kabeln in einer Windkraftanlage oder dessen Gründungsstruktur zu vermeiden.

Diese Aufgabe wird durch eine Windkraftanlage nach Anspruch 1 gelöst.

Die Windkraftanlage verfügt über eine Gründungsstruktur, insbesondere ein Hohlstrukturelement. Das Hohlstrukturelement kann dabei insbesondere als Monopile, Tripile, Tripod oder Schwergewichtsfundament mit Monopile ausgeführt sein. Auch kann das Hohlstrukturelement schwimmend gegründet sein.

In einem Bodenbereich des Hohlstrukturelements, welcher im Einbauzustand unterhalb des Wasserspiegels (Lowest Astronomical Tide, LAT) liegt, ist zumindest eine Kabeleinführung vorgesehen. Für jedes in das Hohlstrukturelement einzuführende Kabel kann eine separate Kabeleinführung vorgesehen sein. Innerhalb des Hohlstrukturelementes können mehr als 2, bevorzugt mehr als 5, insbesondere 7 bis 8 Kabel, bevorzugt bis zu maximal 12 Kabel geführt sein, sodass eine entsprechende Anzahl an Kabeleinführungen vorgesehen sein kann. Die Kabel können sowohl Mittelspannungskabel als auch Hochspannungskabel sein. Entsprechende Kabelquerschnitte können gegeben sein.

Ist das Hohlstrukturelement im Boden gegründet, so können die Kabeleinführungen im Einbauzustand vorzugsweise 1m bis 5m oberhalb des Bodens, insbesondere des Meerbodens, liegen. Unterhalb der Kabeleinführungen kann ein Kolkschutz vorgesehen sein und die Kabeleinführungen liegen bevorzugt oberhalb des Kolkschutzes.

Innerhalb des Hohlstrukturelements werden die Kabel im Einbauzustand von der Kabeleinführung bis zu einer ersten Plattform geführt. Daher wird vorgeschlagen, dass innerhalb des Hohlstrukturelements, oberhalb des Wasserspiegels (Lowest Astronomical Tide, LAT) eine erste Plattform angeordnet ist. Diese erste Plattform kann insbesondere ein air tight deck sein. An der ersten Plattform können cable hang-offs vorgesehen sein, an denen die Kabel befestigt werden.

Problematisch ist die Kühlung der Kabel. Da in dem Hohlstrukturelement, wie oben ausgeführt, mehrere Kabel gleichzeitig geführt sind, heizt das Innere des Monopiles stark auf. Da der Austausch von Kühlmedium zwischen dem Inneren und dem Äußeren des Hohlstrukturelements durch die Wände des Hohlstrukturelements beeinträchtigt ist, kann es dazu kommen, dass die Abwärme von den Kabeln nicht ausreichend abgeführt wird. Aus diesem Grunde wird ein aktives Steuerelement vorgeschlagen, dass einen Medienaustausch zwischen dem Inneren des Hohlstrukturelements und dem Äußeren des Hohlstrukturelements bewirkt.

Ein Medium kann dabei insbesondere Luft und/oder Wasser sein. Das Medium ist insbesondere die Umgebungsluft des Hohlstrukturelements und/oder das das Hohlstrukturelement umspülende Meerwasser.

Die Mantelfläche des Hohlstrukturelements kann die Außenhaut des Hohlstrukturelements sein. Dies kann insbesondere ein Blech sein, insbesondere ein Stahlblech. Die Strömungsöffnung verbindet den Innenraum des Hohlstrukturelements mit dem äußeren des Hohlstrukturelements. Die Strömungsöffnung kann eine Bohrung oder eine sonstige Ausnehmung in der Mantelfläche sein. Über die Strömungsöffnung kann Außenluft in das Innere des Hohlstrukturelements strömen. Über die Strömungsöffnung kann erhitzte Innenluft von dem Inneren des Hohlstrukturelements nach außen strömen. Wenn nachfolgend die Rede von Luft oder Lüftung gemeint ist, betrifft dies das Medium Luft. Die Aussagen gelten dann aber auch für Wasser, welches als Medium durch die Strömungsöffnung in das Hohlstrukturelement und aus dem Hohlstrukturelement fließen kann.

Mit Hilfe des zumindest einen Steuerelements kann der Austausch von Medium zwischen dem Inneren und dem Äußeren des Hohlstrukturelements aktiv beeinflusst, insbesondere gesteuert oder geregelt werden. Dabei wird anders als bei rein passiven Systemen, die Strömungsgeschwindigkeit, das Strömungsvolumen, die Strömungsrichtung und/oder der Strömungsdruck durch das Steuerelement aktiv beeinflusst. Das heißt, dass durch das Steuerungselement beeinflusst werden kann, wie und in welchem Maße das Medium (Luft und/oder Wasser) durch das Hohlstrukturelement entlang der Kabel strömt um somit einen Kühlungseffekt an den Kabeln zu erzielen.

Wie bereits erwähnt, kann das Hohlstrukturelement ein Monopile sein. Dabei kann das Hohlstrukturelement schwimmend gegründet sein oder im Boden gegründet sein. Auch ist es möglich, dass das Hohlstrukturelement ein Tripile oder Tripod ist. Andere Hohlstrukturelemente sind ebenfalls denkbar. Bei den Hohlstrukturelementen können die Kabel im Inneren geführt werden, so dass J-Tubes entfallen können.

Die gegenständliche Windkraftanlage kann insbesondere eine Umspannstation, auch Trafostation oder Substation genannt, sein. In einer Umspannstation laufen Kabel einer Mehrzahl von Windturbinen eines Windparks zusammen. Diese Kabel werden bevorzugt über die Kabeleinführung in das Innere des Hohlstrukturelements geführt. Durch die Strömungsöffnung erfolgt eine Kühlung des Inneren des Hohlstrukturelements. Auch ist es möglich, dass die Windkraftanlage eine Windturbine ist. In der Windturbine können mehrere Kabel innerhalb des Hohlstrukturelements geführt sein, die gegenständlich über die Strömungsöffnung gekühlt werden können.

In dem Hohlstrukturelement können an der Außenhaut Strömungsöffnungen vorgesehen sein. An zumindest einer dieser Öffnungen kann das zumindest ein Steuerungselement angeordnet sein. Zumindest eine Strömungsöffnung kann oberhalb der Plattform in dem Hohlstrukturelement angeordnet sein. In einem solchen Fall muss das Medium durch die Plattform hindurch bis zu dem Inneren des Hohlstrukturelements unterhalb der Plattform geführt sein. Die Plattform kann aber dazu dienen, das Steuerungselement aufzunehmen so dass dieses leicht in dem Hohlstrukturelement montiert werden kann. Auch kann zumindest eine Strömungsöffnung unterhalb der Plattform in dem Hohlstrukturelement angeordnet ist. Dann kann das Medium unmittelbar durch die Außenhaut strömen und an die Kabel gelangen.

Das Steuerelement kann unmittelbar an der Strömungsöffnung angeordnet sein. Hierdurch kann der Medienfluss durch die Strömungsöffnung unmittelbar durch das Steuerelement beeinflusst werden. Eine Veränderung der Einstellung des Steuerungselements hat einen unmittelbaren Einfluss auf das Strömungsverhalten des Mediums durch die Strömungsöffnung.

Zur Kühlung der Kabel wird auch vorgeschlagen, dass die Strömungsöffnung über ein Rohr (Belüftungsrohr im Falle von Luft, Strömungsrohr im Falle von Wasser) mit dem Inneren des Hohlstrukturelements unterhalb der Plattform strömungsverbunden ist. Durch das Rohr ist es möglich, das Medium im Inneren des Hohlstrukturelements zu leiten, so dass eine möglichst gleichmäßige Kühlung unterhalb der Plattform ermöglicht ist. Somit kann erreicht werden, dass die maximale Leiteroberflächentemperatur von 90°C möglichst an keiner Stelle entlang der Kabel von der Plattform bis zur Wasseroberfläche erreicht wird.

Unterhalb der Plattform kann sich das aktive Korrosionsschutzsystem befinden. Dadurch entstehen Chlorgase. Diese dürfen bei einem Belüftungssystem nicht in begehbare Bereiche gelangen. Somit ist eine möglichst gasdichte Ausführung der Belüftungsrohre bis hin zur Auslassöffnung notwendig.

Auch wird vorgeschlagen, dass das Steuerungselement zwischen der Strömungsöffnung und dem Rohr, zwischen der Strömungsöffnung und dem Inneren des Hohlstrukturelements oder außen an der Strömungsöffnung angeordnet ist. Ist das Steuerungselement zwischen der Strömungsöffnung und dem Rohr angeordnet, so kann das Medium durch die Strömungsöffnung und das Steuerelement in das Rohr strömen. In diesem Fall kann durch das Steuerelement der Mediumstrom in dem Rohr beeinflusst werden. Insbesondere kann ein Strömungsvolumen durch das Rohr gegenüber einer natürlichen, z.B. durch Wind bewirkten Strömung vergrößert werden. Das Steuerelement kann auch im Innenraum des Hohlstrukturelements angeordnet sein und so vor Umwelteinflüssen geschützt sein. Ist das Steuerelement außen an der Strömungsöffnung angeordnet, kann es besonders einfach gewartet werden. Dies gilt insbesondere, wenn die Strömungsöffnung unterhalb der Plattform liegt, da die Öffnung dann ansonsten nach der Montage des Hohlstrukturelements von Innen nicht mehr zugänglich ist.

Auch wird vorgeschlagen, dass zumindest eine Strömungsöffnung eine Abströmöffnung ist und/oder dass zumindest eine Strömungsöffnung eine Zuströmöffnung ist. Durch eine Zuströmöffnung kann Medium in das Innere des Hohlstrukturelements geleitet werden. Über eine Abströmöffnung kann Medium aus dem Inneren des Hohlstrukturelements nach außen geleitet werden.

Das Steuerelement kann gemäß einem Ausführungsbeispiel ein Lüfter, insbesondere ein Gebläse sein. Der Lüfter kann über die Strömungsöffnung Außenluft ansaugen und in das Belüftungsrohr oder das Innere des Hohlstrukturelements einblasen. Der Lüfter kann über die Strömungsöffnung Innenluft ansaugen und nach außen ausblasen. Durch den Lüfter wird ein erhöhter Luftaustausch ermöglicht. Dies fördert die Kühlleistung des Systems. Auch kann ein Ventilator, eine Düse oder ein Propeller als Steuerelement dienen. Insbesondere bei Wasser kann eine Düse oder ein Propeller sinnvoll sein.

Auch wird vorgeschlagen, dass das Steuerelement eine steuerbare Klappe und/oder - Verschluss ist. Die Klappe und/oder Verschluss kann dabei geöffnet oder geschlossen werden sowie beispielsweise stufig oder stufenlos in zumindest zwei Positionen zwischen einer Offenposition und einer Geschlossenposition bewegt werden. Hierdurch lässt sich der Strömungsquerschnitt an der Strömungsöffnung variieren. Auch bewirkt ein Verstellen der Klappe und/oder Verschluss, dass diese von Verkrustungen und/oder Anwachsungen und/oder maritimen Bewuchs befreit werden kann. Das Verstellen kann motorisch, insbesondere elektromotorisch oder manuell, insbesondere über Schiebetüren oder Objektivverschlüsse, erfolgen.

Die Strömungsöffnung kann durch ein Gitter oder ein Netz, welches durchlässig für das Medium aber undurchlässig für größere Gegenständer wir Treibgut oder Tiere ist, verschlossen sein. Dadurch wird verhindert, dass Schmutz oder Tiere in das Innere des Hohlstrukturelements gelangen. Ausserdem können die Strömungsöffnungsöffnungen oberhalb des Wasserspiegels (Lowest Astronomical Tide, LAT) außen nach unten abgewinkelt sein um das Eindringen von Regenwasser zu vermeiden.

Die Plattform ist vorzugsweise mit cable hang-offs ausgestaltet, so dass sie eine, die durch die Kabeleinführung in das Hohlstrukturelement eingeführten Kabel aufnehmende Kabelaufhängung aufweist.

Um die Zuluft von außen in das Belüftungsrohr zu ermöglichen, wird eine erste bodenseitige Öffnung in der Plattform vorgesehen. Diese erste Öffnung ist im Bereich der Strömungsöffnung und insbesondere im Bereich des Belüftungsrohrs. Das Belüftungsrohr ist bevorzugt unmittelbar an der ersten Öffnung angeordnet.

Die Plattform ist bevorzug ein air tight deck, welches bis auf die vorgeschlagenen bodenseitigen Öffnungen und eine Wartungsklappe keine weiteren Öffnungen aufweist. Das air tight deck ist insbesondere im Wesentlichen luftdicht und teilt das Hohlstrukturelement in einen Bodenbereich und einen Kopfbereich ein. Der Kopfbereich liegt oberhalb der Plattform und der Bodenbereich liegt unterhalb der Plattform.

Die Strömungsöffnung ist mit dem Belüftungsrohr über die erste Öffnung strömungsverbunden. Somit kann Luft von der Strömungsöffnung durch die erste Öffnung in das Belüftungsrohr strömen und für eine Kühlung der Kabel im Bodenbereich sorgen.

Das (Belüftungs)Rohr erstreckt sich entlang der Längsachse des Hohlstrukturelements. Dadurch wird eine Kühlung der Kabel entlang der Längsachse des Hohlstrukturelements ermöglicht. Das (Belüftungs)Rohr kann an einer Innenwand des Hohlstrukturelements angeordnet sein. Dabei kann das (Belüftungs)Rohr parallel zur Längsachse des Hohlstrukturelements verlaufen. Auch ist es möglich, dass das Hohlstrukturelement helixförmig umlaufend um die Längsachse des Hohlstrukturelements ist. Auch hierbei kann das (Belüftungs)Rohr an der Innenwand des Hohlstrukturelements angeordnet sein. Im Einbauzustand ist das Belüftungsrohr bevorzugt vertikal erstreckend an der Innenwand des Hohlstrukturelements angeordnet. Das Belüftungsrohr kann aber auch frei hängend an der Unterseite des air tight deck's angeordnet sein.

Zur Kühlung der Kabel wird vorgeschlagen, dass das (Belüftungs)Rohr in Abständen zueinander, insbesondere in regelmäßigen Abständen zueinander Abströmöffnungen aufweist. Über diese Abströmöffnungen kann die Zuluft/ das Wasser aus dem (Belüftungs)Rohr in das Innere des Hohlstrukturelements strömen und somit die dortige Luft / das Wasser kühlen. Durch die Abströmöffnungen wird erreicht, dass die Zuluft / das Wasser möglichst gleich verteilt in das Innere des Hohlstrukturelements einströmt.

Gemäß einem Ausführungsbeispiel wird vorgeschlagen, dass die Abströmöffnungen des (Belüftungs)Rohr als Schlitze oder Bohrungen gebildet sind und/oder dass die Abströmöffnungen des (Belüftungs)Rohr in Richtung des Zentrums des Hohlstrukturelements gerichtet sind. Wie bereits erwähnt, ist das (Belüftungs)Rohr im Bereich oder unmittelbar an der Innenwand des Hohlstrukturelements angeordnet. Die Kabel hängen in der Regel mittig des Hohlstrukturelements, so dass die zuströmende Luft / das Wasser möglichst radial nach Innen strömt. Daher sind die Abströmöffnungen bevorzugt in Richtung des Zentrums des Hohlstrukturelements gerichtet. Auch kann das (Belüftungs)Rohr mittig in dem Hohlstrukturelement angeordnet sein und die Belüftungsöffnungen können radial nach außen weisen. Die einströmende Luft / das Wasser kann dann nach allen Seiten ausgeblasen werden.

Bodenseitig des Belüftungsrohrs kann ein Abströmen der Zuluft über eine bodenseitige Öffnung des Belüftungsrohres oder eine bodenseitige Abströmöffnung ermöglicht werden. Das Belüftungsrohr kann einen Boden mit einer Abströmöffnung aufweisen oder ohne Boden, bodenseitig offen, gebildet sein. In beiden Fällen erfolgt ein Abströmen der Zuluft.

Gemäß einem Ausführungsbeispiel wird vorgeschlagen, dass das Belüftungsrohr bodenseitig im Einbauzustand in einem Abstand zu einem Seewasserspiegel endet. Der Abstand ist bevorzugt einige Meter oberhalb LAT. Insbesondere ist der Abstand kleiner als 21m oberhalb von LAT. Der Abstand ist insbesondere abhängig vom Tidenhub des Aufstellorts des Hohlstrukturelements gewählt. Der Abstand ist bevorzugt so zu wählen das bei HAT (highest astronomical tide) immer noch ein gewisser Abstand zwischen der Bodenseite des Belüftungsrohres und dem Wasserspeigel gewährleistet wird ist.

Um erwärmte Luft aus dem Hohlstrukturelement abzuführen, wird vorgeschlagen, dass zumindest eine Strömungsöffnung in der Art einer Abströmöffnung in dem Hohlstrukturelement angeordnet ist. Dabei ist es möglich, dass die Abströmöffnung oberhalb oder unterhalb der Plattform angeordnet ist. Auch kann auch eine Mehrzahl an Abströmöffnungen entlang der vertikalen Achse oder entlang des Umfangs des Hohlstrukturelements vorgesehen sein. Hierüber kann gegebenenfalls ein gleichmäßiges Abströmen des erhitzten Mediums erreicht werden.

Auch kann auch eine Mehrzahl an Strömungsöffnungen als Zustromöffnungen gebildet sein. Die Zustromöffnungen können entlang der vertikalen Achse oder entlang des Umfangs des Hohlstrukturelements vorgesehen sein. Hierüber kann gegebenenfalls ein gleichmäßiges Zuströmen von frischem Medium in das Hohlstrukturelement erreicht werden.

Um die Abluft durch die Plattform führen zu können, wird vorgeschlagen, dass die Plattform eine bodenseitige zweite Öffnung insbesondere im Bereich der Abströmöffnung aufweist.

Über die zweite Öffnung ist die Abströmöffnung mit dem Inneren des Hohlstrukturelements unterhalb der Plattform strömungsverbunden. Somit kann über die zweite Öffnung Luft vom Inneren des Hohlstrukturelements unterhalb der Plattform zur Abströmöffnung strömen und von dort nach außen abgeführt werden.

Um die Temperatur in dem Hohlstrukturelement zu erfassen, wird vorgeschlagen, dass im Inneren des Hohlstrukturelements unterhalb der Plattform zumindest ein Temperatursensor angeordnet ist. Über diesen Temperatursensor ist es möglich, zu erfassen, ob die Kabel unterhalb der Leiternenntemperatur liegen. Der Temperatursensor kann dazu genutzt werden, zumindest das Steuerelement zu steuern oder zu regeln.

Übersteigt die Temperatur einen oberen Grenzwert, kann bei einer Steuerung z.B. einer oder beider Lüfter eingeschaltet werden (oder eine Lüfterklappe und/oder - verschluss geöffnet werden) und bei einem Unterschreiten einer Temperatur kann zumindest einer der Lüfter ausgeschaltet werden (oder eine Lüfterklappe und/oder - verschluss geschlossen werden). Das Ein- und Ausschalten oder Öffnen und Schließen des Steuerelements abhängig von der Temperatur kann über eine Hysterese gesteuert sein. Auch ist es möglich, dass abhängig von der Temperatur die Leistung eines oder beider Lüfter geregelt ist oder der Öffnungsgrad einer Lüfterklappe und/oder - verschluss geregelt ist. Eine P, PI oder eine PID Regelung des Steuerelements abhängig von der Temperatur ist möglich.

Übersteigt die Stromstärke in einem oder in mehreren Kabeln jeweils einzeln oder in Summe einen Grenzwert, kann ein Kühlen notwendig werden. Daher wird vorgeschlagen, dass an zumindest einem der Kabel zumindest ein Stromsensor angeordnet ist. Über diesen Stromsensor ist es möglich, zu erfassen, ob die von den Kabeln abgegebene joulsche Wärme ein Kühlen notwendig macht oder nicht. Der Stromsensor kann dazu genutzt werden, zumindest das Steuerelement zu steuern oder zu regeln.

Übersteigt die Stromstärke einen oberen Grenzwert, kann bei einer Steuerung z.B. einer oder beider Lüfter eingeschaltet werden (oder eine Klappe und/oder Verschluss geöffnet werden) und bei einem Unterschreiten einer Stromstärke kann zumindest z.B. einer der Lüfter ausgeschaltet werden (oder eine Klappe und/oder -verschluss geschlossen werden). Das Ein- und Ausschalten oder Öffnen und Schließen des Steuerelements abhängig von der Stromstärke kann abhängig von der Stromstärke, insbesondere über eine Hysterese gesteuert sein. Auch ist es möglich, dass abhängig von der Stromstärke die Leistung des Steuerelements, insbesondere eines oder beider Lüfter, geregelt ist oder der Öffnungsgrad einer Klappe und/oder Verschluss geregelt ist. Eine P, PI oder eine PID Regelung des Steuerelements abhängig von der Stromstärke ist möglich.

Ein Kühlen des Inneren des Hohlstrukturelements unterhalb der Plattform ist insbesondere in den Sommermonaten notwendig. In den Wintermonaten kann es aufgrund der größeren Leistung zu einer erhöhten Erwärmung der Kabel kommen. Um die joulesche Wärme der Leitungen zu nutzen, ist es möglich, diese Abwärme nicht über die Abluftöffnungen nach außen zu führen, sondern in das Inneren des Hohlstrukturelements oberhalb der Plattform, insbesondere in die dort angeordneten technischen Einrichtungen, insbesondere der Umspannanlage. Aus diesem Grunde ist an der Abluftöffnung ein Strömungsventil vorgesehen. Dieses Strömungsventil kann insbesondere ein 3/2 Strömungsventil sein.

Mit Hilfe des Strömungsventils ist es möglich, bedarfsweise Medium über die zweite Öffnung entweder an die Auslassöffnung zu führen oder in das Innere des Hohlstrukturelements oberhalb der Plattform. Aus diesem Grunde wird vorgeschlagen, dass ein Einlass des Strömungsventils mit der zweiten Öffnung und/oder dem Lüfter strömungsverbunden ist. Somit strömt über den Einlass Medium vom Inneren des Hohlstrukturelements unterhalb der Plattform in das Strömungsventil ein. Ein erster Auslass des Strömungsventils kann mit der Auslass Öffnung strömungsverbunden sein und ein zweiter Auslass des Strömungsventils kann mit dem Inneren des Hohlstrukturelements oberhalb der Plattform strömungsverbunden sein. Dadurch ist es möglich, bedarfsweise die Abluft / Medium entweder über die Auslass Öffnung nach außen zu führen oder im Inneren des Hohlstrukturelements gegebenenfalls zu Heizzwecken zu nutzen.

Nachfolgend wird der Gegenstand anhand einer Ausführungsbeispiele zeigenden Zeichnung näher erläutert. In der Zeichnung zeigen:
- Fig. 1a-c: verschiedene Hohlstrukturelemente mit unterschiedlichen Gründungen;
- Fig. 2: ein Hohlstrukturelement gemäß einem Ausführungsbeispiel;
- Fig. 3: ein Strömungsventil gemäß einem Ausführungsbeispiel;
- Fig. 4a, b: unterschiedliche Zuluft bzw. Abluftöffnungen;
- Fig. 5: eine Anordnung eines Belüftungsrohrs gemäß einem Ausführungsbeispiel;
- Fig. 6: ein Belüftungsrohr mit Öffnungen gemäß einem Ausführungsbeispiel;
- Fig. 7: ein Hohlstrukturelement gemäß einem weiteren Ausführungsbeispiel;
- Fig. 8a-c: eine Lüftungsklappe und/oder -verschluss gemäß einem Ausführungsbeispiel;
- Fig. 9a-c: eine Lüftungsklappe und/oder -verschluss gemäß einem weiteren Ausführungsbeispiel.

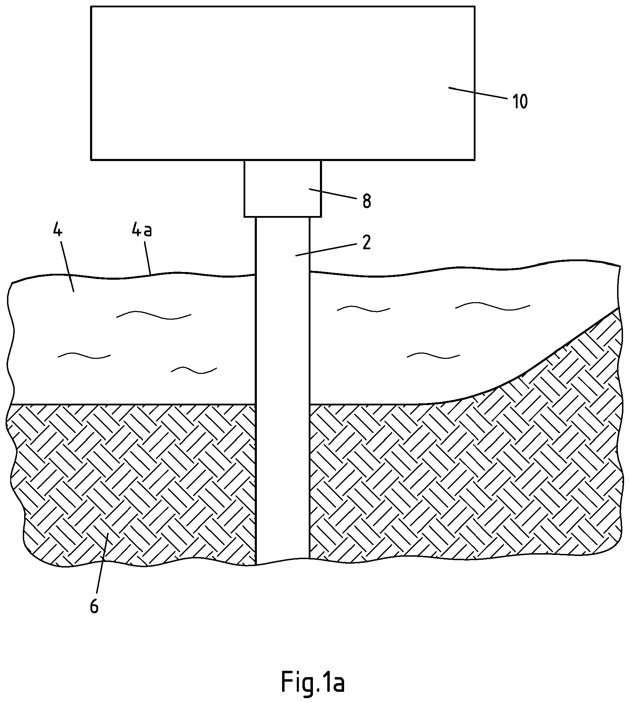

Fig. 1a zeigt ein Monopile 2 als Hohlstrukturelement. Der Monopile 2 ist auf offener See 4 auf dem Seeboden 6 gegründet. Der Monopile 2 steht über LAT 4a hinaus und ist über ein Transition Piece 8 mit einer Anlage einer Windkraftanlage, beispielsweise einer Substation 10 verbunden.

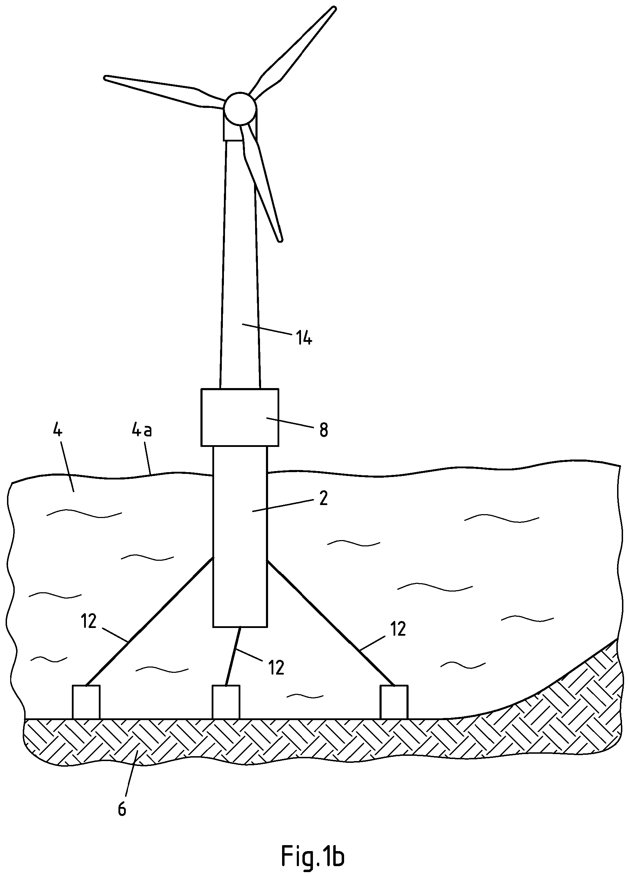

Ein weiteres Hohlstrukturelement ist in der Fig. 1b gezeigt. Auch hier ist ein Monopile 2 vorgesehen, welches jedoch schwimmend gelagert ist und über Anker 12 im Seeboden 6 gegründet ist. Beispielhaft ist gezeigt, dass an dem Transition Piece 8 ein weiterer Turm 14 befestigt ist, der beispielsweise eine Windturbine trägt.

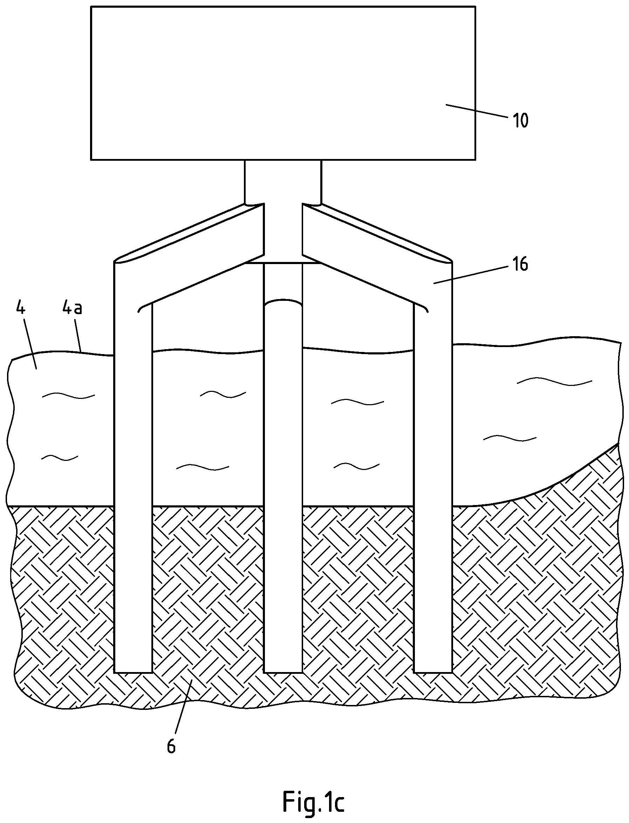

Eine weitere mögliche Gründung eines Hohlstrukturelements ist in Fig. 1c gezeigt. Ein Tripile 16 dient hierbei als Träger für eine Substation 10 und ist im Boden 6 gegründet.

Diese und weitere Hohlstrukturelemente als Träger für Windkraftanlagen, beispielsweise Windturbinen oder Substations eignen sich für die gegenständliche Anordnung eines Kühlsystems.

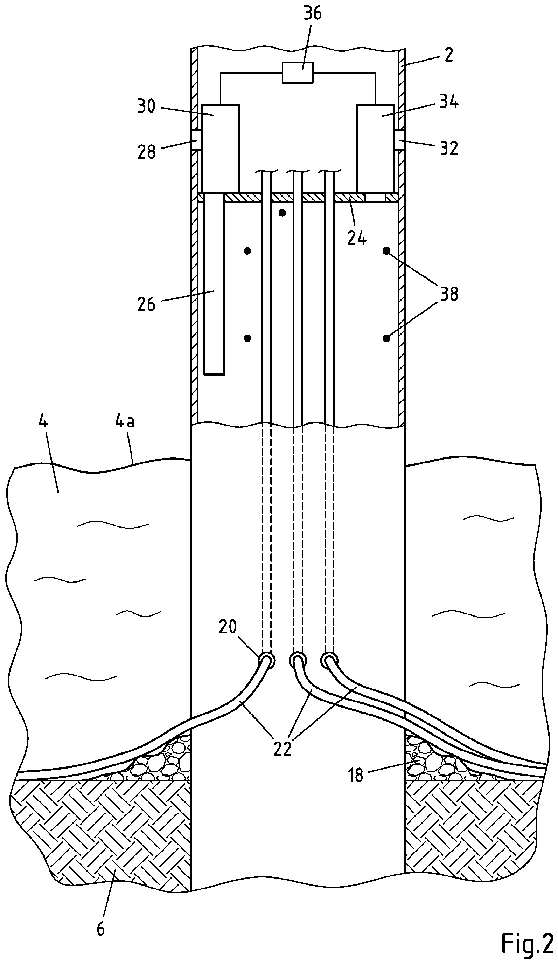

Fig. 2 zeigt ein Monopile 2 welches im Boden 6 gegründet ist. Oberhalb eines Kolkschutzes 18, in etwa in einem Abstand von 1m bis 5m oberhalb des Bodens 6 befindet sich Kabeleinführungen 20. Durch die Kabeleinführungen 20 sind Seekabel 22 in das Innere des Monopiles 2 geführt. Die Seekabel 22 sind armierte Kabel, beispielsweise mit einer Stahlarmierung. Diese werden innerhalb des Monopiles von den Kabeleinführungen 20 bis zu einer ersten Plattform 24 geführt. An der Plattform 24 sind die Seekabel 22 über Kabelaufhängungen (nicht gezeigt) aufgehängt. Die Plattform 24 wird auch als air tight deck bezeichnet, da die Seekabel 22 im Wesentlichen isoliert von der Unterseite der Plattform 24 zur Oberseite der Plattform 24 geführt werden. Auf der Oberseite der Plattform 24 lassen sich die Seekabel 22 bedarfsweise verschalten, beispielsweise mit einer Trafostation nicht gezeigt.

Durch die Kabelführung im Inneren des Monopiles 2 kann es dazu kommen, dass mehr als zwei, beispielsweise fünf, sechs, acht oder zehn Seekabel 22 gleichzeitig im Inneren des Monopiles 2 geführt sind. Durch ohmsche Verluste entsteht an den Seekabeln 22 joulesche Wärme, die abgeführt werden muss. Anders als bei bisherigen Installationen, bei denen die Seekabel 22 außerhalb des Monopiles 2 in J-Tubes geführt wurden und dort durch die Umgebungsluft gekühlt werden konnten, steht diese Möglichkeit bei einer vorliegenden Anordnung nur begrenzt zur Verfügung. Der Luftaustausch im Inneren des Monopiles 2 mit der Außenluft ist nahezu nicht gegeben, so dass es insbesondere bei hohen Außentemperaturen dazu kommen könnte, dass die Seekabel 22 ihre Leiternenntemperatur von beispielsweise 90°C übersteigen.

Um dies zu verhindern, wird vorgeschlagen, dass die Seekabel innerhalb des Monopiles 2 unterhalb der Plattform 24 über ein Belüftungsrohr 26 gekühlt werden. Hierzu ist in dem Monopiles 2 oberhalb der Plattform 24 eine Strömungsöffnung 28 vorgesehen. Die Strömungsöffnung 28 durchbricht die Außenhaut des Monopiles, sodass Luft von außen nach innen strömen kann. An der Strömungsöffnung 28 ist ein Gebläse 30 angeordnet. Dieses Gebläse 30 ist mit seinem Einlass mit der Strömungsöffnung 28 strömungsverbunden und mit seinem Auslass über eine erste Öffnung in der Plattform 24 mit dem Belüftungsrohr 26. Durch das Gebläse 30 wird Luft von außen über die Strömungsöffnung 28 angesaugt und über das Belüftungsrohr 26 in den Innenraum des Monopiles 2 unter der Plattform 24 eingeblasen. Hierdurch wird ein Kühleffekt an den Kabel 22 erreicht.

Um den Kühleffekt zu erhöhen, wird vorgeschlagen, dass eine Strömungsöffnung als Abluftöffnung 32 ebenfalls die Außenhaut des Monopiles 2 durchbrechend vorgesehen ist. An der Abluftöffnung 32 ist ein Gebläse 34 vorgesehen. Das Gebläse 34 ist über eine zweite Öffnung in der Plattform 24 mit einem Einlass mit dem Innenraum unterhalb der Plattform 24 verbunden. Der Auslass des Gebläses 34 ist zumindest strömungsverbunden mit der Abluftöffnung 32, so dass über das Gebläse 34 Luft vom Innenraum des Monopiles 2 unterhalb der Plattform 24 angesaugt wird und über die Abluftöffnung 32 nach außen geblasen wird. Hierdurch wird im Innenraum des Monopiles 2 unterhalb der Plattform 24 eine Luftströmung erreicht, die zum Abtransport von erwärmter Luft genutzt wird. Dadurch wird eine optimierte Kühlung des Seekabels 22 erreicht.

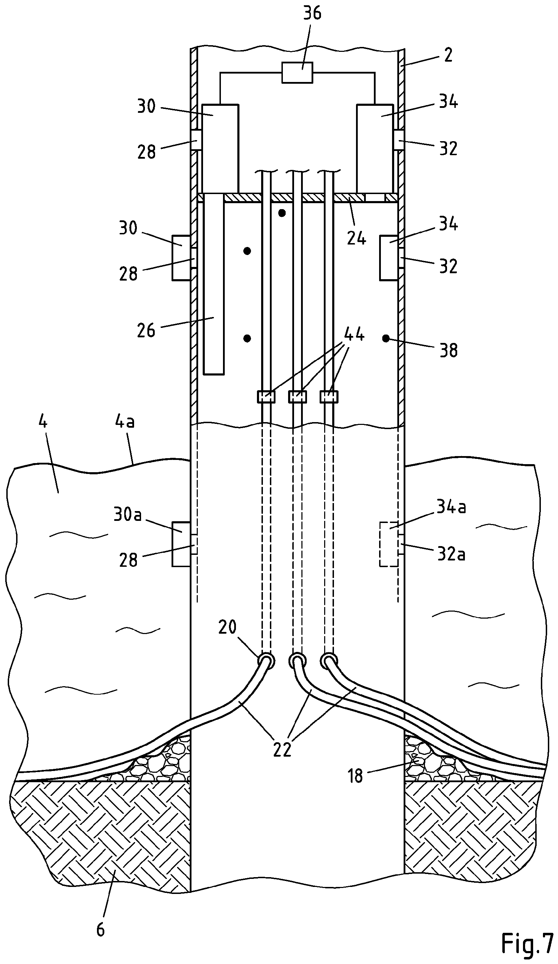

Die Gebläse 30, 34 können über einen Prozessor 36 gesteuert werden. Der Prozessor kann mit innerhalb des Monopiles 2 unterhalb der Plattform 24 angeordneten Temperatursensoren 38 verbunden sein (nicht gezeigt). Die Verbindung kann drahtgebunden oder drahtlos sein. Abhängig von der durch die Temperatursensoren 38 gemessenen Temperatur kann der Prozessor 36 auch eine Regelung der Gebläse 30, 34 vornehmen. Insbesondere kann eine P, PI oder PID Regelung erfolgen, mit der die Leistung der Gebläse 30, 34 einstellbar ist. Der Prozessor 36 kann auch über eine Stromstärke, die mit einem Stromsensor (beispielhaft gezeigt in Fig. 7) gemessen wird, eine Regelung der Gebläse 30, 34 bewirken.

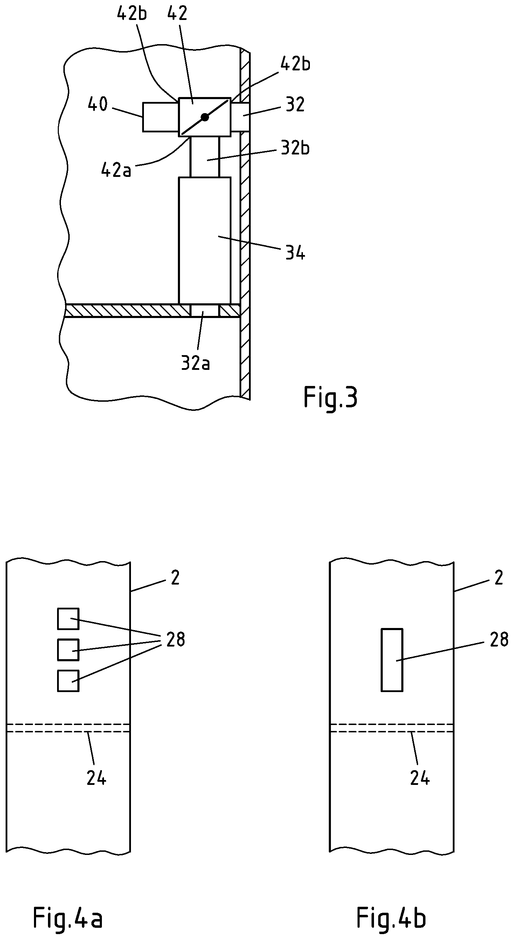

Fig. 3 zeigt eine Variante, bei der die erwärmte Luft aus dem Innenraum des Monopiles 2 nicht zwangsläufig über die Abluftöffnung 32 ausgeblasen wird, sondern beispielsweise in den Wintermonaten zu Heizzwecken genutzt werden kann, Ein Einlass 32a des Gebläses 34 kann mit dem Innenraum des Monopiles 2 unterhalb der Plattform 24 verbunden sein. Ein Auslass 32b des Gebläses 34 kann mit einem Strömungsventil 42 verbunden sein. Das Strömungsventil 42 kann ein 3/2 Ventil sein mit einem Einlass 42a und zwei Auslässen 42b. Ein erster Auslass 42b kann strömungsverbunden mit der Abluftöffnung 32 sein und ein zweiter Auslass 42b kann über eine Öffnung 40 mit dem Innenraum des Monopiles 2 oberhalb der Plattform 24 verbunden sein. Je nach Ventilstellung des Strömungsventils 42 kann so die über den Einlass 32a angesaugte, erwärmte Luft entweder über die Abluftöffnung 32 nach außen geblasen werden oder über die Öffnung 40 in den Innenraum des Monopiles 2 und dort technische Anlagen vor Frostschäden schützen.

Fig. 4a, b zeigen verschiedenste Formen von Strömungsöffnungen 28. Abluftöffnungen 32 können entsprechend gestaltet werden. Zu erkennen ist, dass die Strömungsöffnungen 28 oberhalb der Plattform 24 an der Außenhaut des Monopiles 2 angeordnet sind. Die Strömungsöffnungen 28 können durch mehrere Öffnungen wie in Fig. 4a gezeigt, gebildet sein oder eine einzige Öffnung, wie in Fig. 4b gezeigt ist, sein.

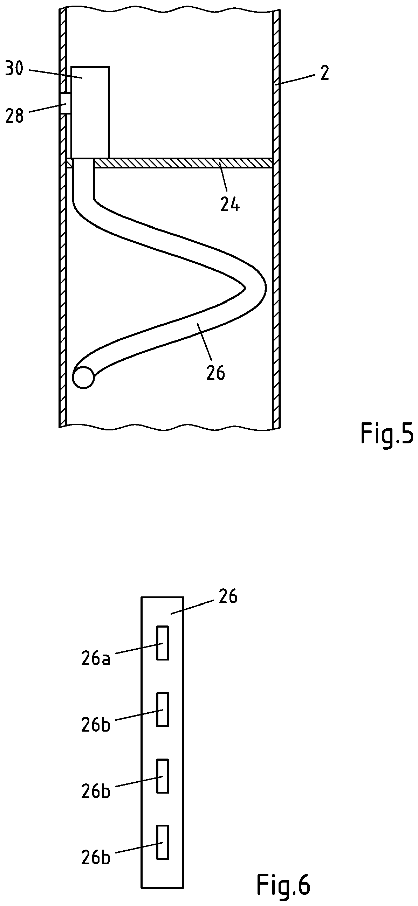

Zur Verteilung der angesaugten Außenluft innerhalb des Monopiles 2 ist das Belüftungsrohr 26 bevorzugt parallel zur Längsachse des Monopiles 2 an einer Innenwand der Außenhaut des Monopiles 2 angeordnet. Gemäß der Fig. 2 verläuft das Belüftungsroh 26 in der Einbauposition vertikal. Eine andere Anordnung zeigt die Fig. 5. Hierbei ist das Belüftungsrohr 26 Helix förmig umlaufend an der Innenwand der Außenhaut des Monopiles 2 angeordnet. Hierdurch wird eine gleichmäßigere Verteilung der angesaugten Zuluft innerhalb des Monopiles 2 ermöglicht.

In dem Belüftungsrohr 26 können Öffnungen 26a vorgesehen sein, wie die Fig. 6 zeigt. Die Öffnungen 26b können beispielsweise schlitzförmig in regelmäßigen Abständen zueinander sein. Die Öffnungen 26a können zur Mittelachse des Monopiles 2 weisend geformt sein. Über die Öffnungen 26a strömt die angesaugte Luft aus dem Lüftungsrohr in den Innenraum des Monopiles 2 ein.

Fig. 7 zeigt ein Ausführungsbeispiel, bei dem anstelle des Belüftungsrohrs eine Strömung von Kühlmedium durch den Monopile 2 unmittelbar über die Strömungsöffnungen 28, 32 erfolgt. Zu erkennen ist, dass Strömungsöffnungen 28, 32 unterhalb der Plattform 24 in der Außenhaut des Monopiles 2 oberhalb von LAT 4a und/oder unterhalb von LAT angeordnet sein können.

Im Falle einer Anordnung der Strömungsöffnungen oberhalb von LAT 4a kann ein Gebläse 30, 34 innerhalb des Monopiles 2 und/oder außerhalb des Monopiles 2 angeordnet werden, wie gezeigt. Dabei kann das Gebläse 30, 34 unmittelbar an einer Strömungsöffnung 28, 30 angeordnet sein.

Im Falle einer Anordnung der Strömungsöffnungen unterhalb von LAT 4a kann ein Propeller oder eine Düse 30a, 34a innerhalb des Monopiles 2 und/oder außerhalb des Monopiles 2 angeordnet werden, wie gezeigt. Dabei kann das Gebläse 30a, 34a unmittelbar an einer Strömungsöffnung 28, 30 angeordnet sein.

Ein Stromsensor 44 kann an einem oder mehreren Kabeln 22 angeordnet sein. Dies kann z.B. eine Rogowskispule sein. Hierüber kann eine Stromstärke in den Kabeln 22 gemessen werden und diese verwendet werden, um über den Prozessor 36 die Steuereinrichtungen wie Gebläse 30, 34, Propeller 30a, 34a oder Lüfterklappen und/oder -verschlüsse 30b, 34b (nachfolgend gezeigt), anzusteuern.

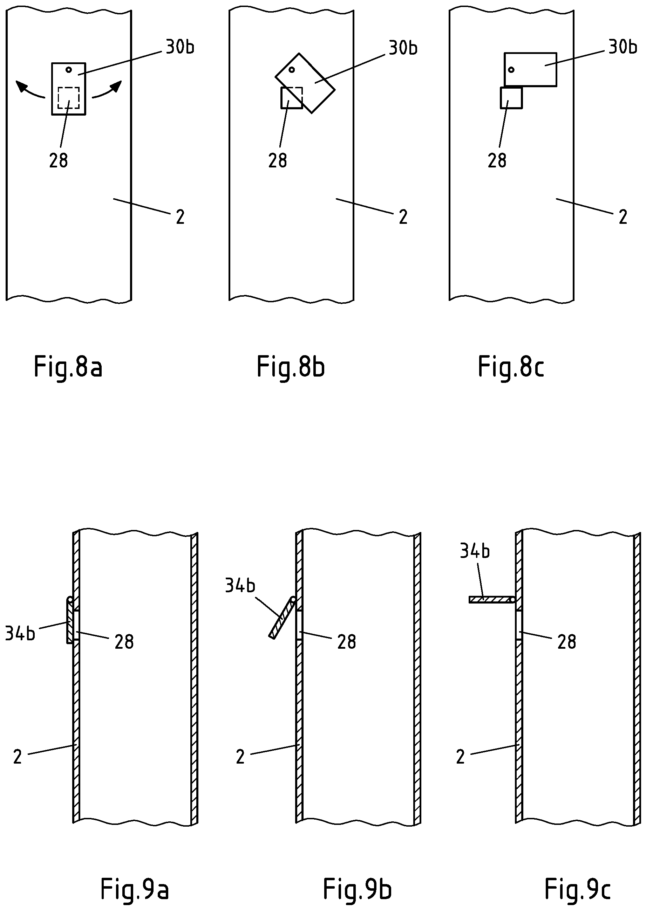

Figs. 8a-c zeigen verschiedene Positionen von seitlich schwenkbaren Lüfterklappe und/oder -verschlussn 30a, die innen oder außen an dem Monopile 2 schwenkbar an einer Strömungsöffnung 28, 32 angeordnet sind. Fig. 8a zeigt eine Geschlossenposition, Fig. 8b zeigt eine Zwischenposition und Fig. 8c zeigt eine Offenposition. Je nach Position verändert sich der Strömungsquerschnitt in der Strömungsöffnung 28, 32, so dass ein Durchfluss von Medium (Luft und/oder Wasser) beeinflusst werden kann. Die Position lässt sich durch den Prozessor 36, insbesondere gesteuert durch die gemessene Temperatur oder die gemessene Stromstärke einstellen.

Fig. Figs. 9a-c zeigen verschiedene Positionen von nach vorne schwenkbaren Lüfterklappe und/oder -verschluss 30a, die innen oder außen an dem Monopile 2 an einer Strömungsöffnung 28, 32 angeordnet sind. Fig. 9a zeigt eine Geschlossenposition, Fig. 9b zeigt eine Zwischenposition und Fig. 9c zeigt eine Offenposition. Je nach Position verändert sich der Strömungsquerschnitt in der Strömungsöffnung 28, 32, so dass ein Durchfluss von Medium (Luft und/oder Wasser) beeinflusst werden kann. Die Position lässt sich durch den Prozessor 36, insbesondere gesteuert durch die gemessene Temperatur oder die gemessene Stromstärke einstellen.

### Bezugszeichenliste

- 2: Monopile
- 4: See
- 4: LAT
- 6: Meeresboden
- 8: Transition Piece
- 10: Substation
- 12: Anker
- 14: Turm
- 16: Tripile
- 18: Kolkschutz
- 20: Kabeleinführung
- 22: Seekabel
- 24: Plattform
- 26: Be- oder Endlüftungsrohr
- 28: Strömungsöffnung
- 30: Gebläse
- 30a: Propeller
- 30b: Lüfterklappe und/oder -verschluss
- 32a: Abluftöffnung
- 34: Gebläse
- 34b: Lüfterklappe und/oder -verschluss
- 34a: Propeller
- 36: Prozessor
- 38: Temperatursensor
- 40: Öffnung
- 42: Strömungsventil
- 44: Stromsensor

## Patentansprüche

1. Offshore-Windkraftanlage umfassend:
- zumindest ein Hohlstrukturelement (2),
- zumindest eine in der Mantelfläche des Hohlstrukturelements (2) angeordnete, die Mantelfläche durchbrechende Strömungsöffnung (28), wobei
- zumindest ein aktives Steuerelement (30) mit der Strömungsöffnung (28) strömungsverbunden ist und einen Medienaustausch zwischen dem Inneren des Hohlstrukturelements (2) und dem Äußeren des Hohlstrukturelements (2) beeinflusst, wobei
- die Strömungsöffnung (28) über ein Belüftungsrohr (26) mit dem Inneren des Hohlstrukturelements (2) unterhalb einer ersten Plattform (24) strömungsverbunden ist,
- **dadurch gekennzeichnet,**
- **dass** zumindest eine Kabeleinführung (20) in einem im Einbauzustand unterhalb des Wasserspiegels liegenden Bodenbereich des Hohlstrukturelements (2) angeordnet ist, und
- **dass** innerhalb des Hohlstrukturelements (2), oberhalb des Bodenbereichs die im Wesentlichen luftdichte erste Plattform (24) angeordnet ist.

2. Offshore-Windkraftanlage nach Anspruch 1,
**dadurch gekennzeichnet,**
- **dass** zumindest eine Strömungsöffnung (32) oberhalb der Plattform (24) in dem Hohlstrukturelement (2) angeordnet ist und/oder
- **dass** zumindest eine Strömungsöffnung (32) unterhalb der Plattform (24) in dem Hohlstrukturelement (2) angeordnet ist.

3. Offshore-Windkraftalage nach Anspruch 1 oder 2,
**dadurch gekennzeichnet,**
- **dass** das Steuerelement (30) unmittelbar an der Strömungsöffnung (28) angeordnet ist oder
- **dass** das Steuerungselement (30) zwischen der Strömungsöffnung (28) und dem Belüftungsrohr (26), zwischen der Strömungsöffnung (28) und dem Inneren des Hohlstrukturelements (2) oder außen an der Strömungsöffnung (28) angeordnet ist.

4. Offshore-Windkraftanlage nach einem der vorangehenden Ansprüche,
**dadurch gekennzeichnet,**
- **dass** zumindest eine Strömungsöffnung eine Abströmöffnung (32) ist und/oder dass zumindest eine Strömungsöffnung eine Zuströmöffnung (28) ist.

5. Offshore-Windkraftanlage nach einem der vorangehenden Ansprüche,
**dadurch gekennzeichnet,**
- **dass** das Steuerelement (30) ein Lüfter, insbesondere ein Gebläse, eine Düse, ein Ventilator ein Propeller ist und/oder dass das Steuerelement (20) eine steuerbare Klappe und/oder Verschluss ist.

6. Offshore-Windkraftanlage nach einem der vorangehenden Ansprüche,
**dadurch gekennzeichnet,**
- **dass** die das Hohlstrukturelement (2) ein Monopile ist und/oder
- **dass** die Windkraftanlage eine Umspannstation oder eine Substation innerhalb eines Windparks ist und/oder dass die Windkraftanlage eine Windturbine ist.

7. Offshore-Windkraftanlage nach einem der vorangehenden Ansprüche,
**dadurch gekennzeichnet,**
- **dass** die Plattform (24) eine durch die Kabeleinführung (20) in das Hohlstrukturelement (2) eingeführte Kabel aufnehmende Kabelaufhängung ist, insbesondere dass die Plattform (24) ein air tight-Deck ist.

8. Offshore-Windkraftanlage nach einem der Ansprüche 4, 5 rückbezogen auf Anspruch 4, 6 rückbezogen auf Anspruch 4, 7 rückbezogen auf Anspruch 4,
**dadurch gekennzeichnet,**
- **dass** die Plattform (24) eine bodenseitige erste Öffnung insbesondere im Bereich der Strömungsöffnung (28) aufweist, insbesondere dass die Zuströmöffnung (28) mit dem Belüftungsrohr (26) über die erste Öffnung strömungsverbunden ist.

9. Offshore-Windkraftanlage nach einem der vorangehenden Ansprüche,
**dadurch gekennzeichnet,**
- **dass** sich das Belüftungsrohr (26) entlang der Längsachse des Hohlstrukturelements (2) erstreckt, insbesondere dass sich das Belüftungsrohr (26) im Einbauzustand vertikal erstreckt, insbesondere
- **dass** das Belüftungsrohr (26) in Abständen zueinander, insbesondere in regelmäßigen Abständen zueinander Abströmöffnungen (26b) aufweist insbesondere
- **dass** die Abströmöffnungen (26b) des Belüftungsrohrs als Schlitze oder Bohrungen gebildet sind und/oder dass die Abströmöffnungen (26b) des Belüftungsrohrs (26) in Richtung des Zentrums des Hohlstrukturelements (2) gerichtet sind.

10. Offshore-Windkraftanlage nach einem der vorangehenden Ansprüche,
**dadurch gekennzeichnet,**
- **dass** das Belüftungsrohr (26) bodenseitig offen ist oder dass ein Boden des Belüftungsrohrs (26) eine Abströmöffnung aufweist und/oder
- **dass** das Belüftungsrohr (26) bodenseitig im Einbauzustand in einem Abstand zu einem Seewasserspiegel endet.

11. Offshore-Windkraftanlage nach Anspruch 4,
**dadurch gekennzeichnet,**
- **dass** die Plattform (24) eine bodenseitige zweite Öffnung insbesondere im Bereich der Abströmöffnung (32) aufweist.

12. Offshore-Windkraftanlage nach Anspruch 11,
**dadurch gekennzeichnet,**
- **dass** die Abströmöffnung (32) mit dem Inneren des Hohlstrukturelements (2) unterhalb der Plattform (24) über die zweite Öffnung strömungsverbunden ist.

13. Offshore-Windkraftanlage nach einem der vorangehenden Ansprüche,
**dadurch gekennzeichnet,**
- **dass** im Inneren des Hohlstrukturelements (2) unterhalb der Plattform (24) zumindest ein Temperatursensor (38) angeordnet ist, insbesondere dass das Steuerelement (30) abhängig von einer durch den Temperatursensor (38) gemessenen Temperatur gesteuert oder geregelt ist und/oder
- **dass** an zumindest einem der Kabel zumindest ein Stromsensor (44) angeordnet ist, insbesondere dass das Steuerelement (30) abhängig von einer durch den Stromsensor (44) gemessenen Stromstärke gesteuert oder geregelt ist.

14. Offshore-Windkraftanlage nach Anspruch 11,
**dadurch gekennzeichnet,**
- **dass** zwischen der zweiten Öffnung und der Abströmöffnung (32) ein Strömungsventil (42), insbesondere ein 3/2 Strömungsventil angeordnet ist, derart, dass ein Einlass des Strömungsventils (42) mit der zweiten Öffnung und/oder dem Steuerelement (30) strömungsverbunden ist, dass ein erster Auslass des Strömungsventils (42) mit der Abströmöffnung (32) strömungsverbunden ist und dass ein zweiter Auslass des Strömungsventils (42) mit dem Inneren des Hohlstrukturelements (2) oberhalb der Plattform (24) strömungsverbunden ist.

## Claims

1. Offshore wind power plant comprising:
- at least one hollow structural element (2),
- at least one flow opening (28) arranged in the shell surface of the hollow structural element (2) and breaking through the shell surface, wherein
- at least one active control element (30) is flow-connected to the flow opening (28) and influences a media exchange between the interior of the hollow structural element (2) and the exterior of the hollow structural element (2) wherein
- the flow opening (28) is flow-connected to the interior of the hollow structural element (2) below the platform (24) via a ventilation tube (26)
**characterized in**
- **that** at least one cable entry (20) is arranged, in an installed state, in a bottom region of the hollow structural element below sea water level, and
- **that** a first substantially airtight platform (24) is arranged inside the hollow structural element (2), above the bottom region.

2. Offshore wind power plant according to claim 1,
**characterized in**
- **that** at least one flow opening (32) is arranged above the platform (24) in the hollow structural element (2) and/or
- **that** at least one flow opening (32) is arranged below the platform (24) in the hollow structural element (2).

3. Offshore wind power plant according to claim 1 or 2,
**characterized in**
- **that** the control element (30) is arranged directly at the flow opening (28) or
- the control element (20) is arranged between the flow opening (28) and the ventilation tube (26), between the flow opening (28) and the interior of the hollow structural element (2) or on the outside of the flow opening (28).

4. Offshore wind power plant according to any one of the preceding claims,
**characterized in**
- **that** at least one flow opening is an outflow opening (32) and/or that at least one flow opening is an inflow opening (28).

5. Offshore wind power plant according to any one of the preceding claims,
**characterized in**
- **that** the control element (30) is a fan, in particular a blower, a nozzle, a ventilator, a propeller and/or in that the control element (30) is a controllable flap and/or shutter.

6. Offshore wind power plant according to any one of the preceding claims,
**characterized in**
- **that** hollow structural element (2) is a monopile and/or
- **that** offshore wind power plant is a transformer station or a sub-station within a wind farm and/or that the Offshore wind power plant is a wind turbine.

7. Offshore wind power plant according to any one of the preceding claims,
**characterized in**
- **that** the platform (24) is a cable hang off receiving cables inserted through the cable entry (20) into the hollow structural element (2), in particular that the platform (24) is an air tight deck.

8. Offshore wind power plant according to any one of claims 4, 5 referring back to claim 4, 6 referring back to claim 4, 7 referring back to claim 4,
**characterized in**
- **that** the platform (24) has a ground-side first opening, in particular in the region of the flow opening (28), in particular
- **that** the inflow opening (28) is flow-connected to the ventilation tube (26) via the first opening.

9. Offshore wind power plant according to any one of the preceding claims,
**characterized in,**
- **that** the ventilation tube (16) extends along the longitudinal axis of the hollow structural element (2), in particular that the ventilation tube (26) extends vertically in the installed state in particular
- **that** the ventilation tube (26) has outflow openings (26b) at intervals from one another, in particular at regular intervals from one another, in particular
- **that** the outflow openings (26b) of the ventilation tube are formed as slots or bores and/or that the outflow openings (26b) of the ventilation tube (26) are directed towards the center of the hollow structural element.

10. Offshore wind power plant according to one of the preceding claims,
**characterized in**
- **that** the ventilation tube (26) is open on the bottom side or that a bottom of the ventilation tube (26) has an outflow opening and/or
- **that** the ventilation tube (26) ends on the bottom side in the installed state at a distance from a sea water level.

11. Offshore wind power plant according to claim 4,
**characterized in**
- **that** the platform (24) has a second opening on the ground side, in particular in the region of the outflow opening (32).

12. Offshore wind power plant according claim 11,
**characterized in**
- **that** the outflow opening (32) is flow-connected to the interior of the hollow structural element (2) below the platform (24) via the second opening.

13. Offshore wind power plant according to any one of the preceding claims,
**characterized in**
- **that** at least one temperature sensor (38) is arranged in the interior of the hollow structural element (2) below the platform (24) in particular that the control element (30) is controlled or regulated depending on a temperature measured by the temperature sensor (38) and/or
- **that** at least one current sensor (41) is arranged on at least one of the cables, in particular that the control element (30) is controlled or regulated depending on an amperage measured by the current sensor (41).

14. Offshore wind power plant according to claim 11,
**characterized in**
- a flow valve (42), in particular a 3/2 flow valve, is arranged between the second opening and the outflow opening (32), such that an inlet of the flow valve (42) is flow-connected to the second opening and/or the control element (30), that a first outlet of the flow valve (42) is flow-connected to the outflow opening (32), and that a second outlet of the flow valve (42) is flow-connected to the interior of the hollow structural element (2) above the platform (24).

## Revendications

1. Installation d'énergie éolienne offshore comprenant :
- au moins un élément de structure creuse (2),
- au moins une ouverture d'écoulement (28) disposée dans la surface d'enveloppe de l'élément de structure creuse (2) et traversant la surface d'enveloppe, où
- au moins un élément de commande actif (30) est relié par écoulement à l'ouverture d'écoulement (28) et influence un échange de milieu entre l'intérieur de l'élément de structure creuse (2) et l'extérieur de l'élément de structure creuse (2), où
- l'ouverture d'écoulement (28) est reliée par un tube d'aération (26) à l'intérieur de l'élément de structure creuse (2) en dessous d'une première plate-forme (24),
- **caractérisé en ce**
- **qu'**au moins une entrée de câble (20) est disposée dans une zone de fond de l'élément de structure creuse (2) située en dessous du niveau de l'eau à l'état monté, et
- **que** la première plate-forme (24) essentiellement étanche à l'air est disposée à l'intérieur de l'élément de structure creuse (2), au-dessus de la zone de fond.

2. Installation d'énergie éolienne offshore selon la revendication 1,
**caractérisé en ce**
- **qu'**au moins une ouverture d'écoulement (32) est disposée au-dessus de la plate-forme (24) dans l'élément de structure creuse (2) et/ou
- **qu'**au moins une ouverture d'écoulement (32) est disposée en dessous de la plate-forme (24) dans l'élément de structure creuse (2).

3. Installation d'énergie éolienne offshore selon la revendication 1 ou 2,
**caractérisé en ce**
- **que** l'élément de commande (30) est disposé directement à l'ouverture d'écoulement (28) ou
- **que** l'élément de commande (30) est disposé entre l'ouverture d'écoulement (28) et le tube d'aération (26), entre l'ouverture d'écoulement (28) et l'intérieur de l'élément de structure creuse (2) ou à l'extérieur de l'ouverture d'écoulement (28).

4. Installation d'énergie éolienne offshore selon l'une des revendications précédentes,
**caractérisé en ce**
- **qu'**au moins une ouverture d'écoulement est une ouverture d'afflux (32) et/ou en ce qu'au moins une ouverture d'écoulement est une ouverture d'efflux (28).

5. Installation d'énergie éolienne offshore selon l'une des revendications précédentes,
**caractérisé en ce**
- **que** l'élément de commande (30) est un ventilation, en particulier une soufflante, une tuyère, un ventilateur une hélice et/ou que l'élément de commande (20) est un volet commandable et/ou un fermeture.

6. Installation d'énergie éolienne offshore selon l'une des revendications précédentes,
**caractérisé en ce**
- **que** l'élément de structure creuse (2) est un monopile et/ou
- **que** l'installation d'énergie éolienne est une post de transformation ou une sous-station au sein d'un parc éolien et/ou que l'installation d'énergie éolienne est une turbine éolienne.

7. Installation d'énergie éolienne offshore selon l'une des revendications précédentes,
**caractérisée en ce**
- **que** la plateforme (24) est une suspension de câble recevant des câbles introduits dans l'élément de structure creuse (2) par l'entrée de câble (20), en particulier que la plateforme (24) est un air tight deck.

8. Installation d'énergie éolienne offshore selon l'une des revendications 4, 5 en référence à la revendication 4, 6 en référence à la revendication 4, 7 en référence à la revendication 4,
**caractérisé en ce**
- **que** la plateforme (24) a une première ouverture côté fond, en particulier au niveau de l'ouverture d'écoulement (28), en particulier que l'ouverture d'afflux (28) est en communication fluidique avec le tube d'aération (26) par la première ouverture.

9. Installation d'énergie éolienne offshore selon l'une des revendications précédentes,
**caractérisé en ce**
- **que** le tube d'aération (26) s'étend le long de l'axe longitudinal de l'élément de structure creuse (2), en particulier que le tube d'aération (26) s'étend verticalement dans l'état monté, en particulier
- **que** le tube d'aération (26) a des ouvertures d'efflux(26b) à des distances les unes des autres, en particulier à des distances régulières les unes des autres, en particulier
- **que** les ouvertures d'efflux (26b) du tube d'aération sont formées sous forme de fentes ou de perçages et/ou que les ouvertures d'efflux (26b) du tube d'aération (26) sont orientées en direction du centre de l'élément de structure creux (2).

10. Installation d'énergie éolienne offshore selon l'une des revendications précédentes,
**caractérisé en ce**
- **que** le tube d'aération (26) est ouvert du côté du fond ou qu'un fond du tube d'aération (26) a une ouverture d'efflux et/ou
- **que** le tube d'aération (26) se termine côté fond, dans l'état monté, à une distance d'un niveau d'eau de mer.

11. Installation d'énergie éolienne offshore selon la revendication 4,
**caractérisée en ce**
- **que** la plate-forme (24) a une deuxième ouverture côté fond, en particulier dans la zone de l'ouverture d'afflux (32).

12. Installation d'énergie éolienne offshore selon la revendication 11,
**caractérisée en ce**
- **que** l'ouverture d'efflux (32) est en communication fluidique avec l'intérieur de l'élément de structure creuse (2) sous la plate-forme (24) par l'intermédiaire de la deuxième ouverture.

13. Installation d'énergie éolienne offshore selon l'une des revendications précédentes,
**caractérisé en ce**
- **qu'**au moins un capteur de température (38) est disposé à l'intérieur de l'élément de structure creuse (2) sous la plate-forme (24), en particulier que l'élément de commande (30) est commandé ou régulé en fonction d'une température mesurée par le capteur de température (38), et/ou
- **qu'**au moins un capteur de courant (44) est disposé sur au moins l'un des câbles, en particulier que l'élément de commande (30) est commandé ou régulé en fonction d'une intensité de courant mesurée par le capteur de courant (44).

14. Installation d'énergie éolienne offshore selon la revendication 11,
**caractérisé en ce**
- **qu'**une vanne d'écoulement (42), en particulier une vanne d'écoulement 3/2, est disposée entre la deuxième ouverture et l'ouverture d'efflux (32), de telle sorte qu'une entrée de la vanne d'écoulement (42) est reliée par écoulement à la deuxième ouverture et/ou à l'élément de commande (30), qu'une première sortie de la vanne d'écoulement (42) est en liaison d'écoulement avec l'ouverture d'efflux (32) et qu'une deuxième sortie de la vanne d'écoulement (42) est en liaison d'écoulement avec l'intérieur de l'élément de structure creuse (2) au-dessus de la plate-forme (24).
